# EUROPEAN PATENT SPECIFICATION

(11) **EP 3 334 888 B1**
(45) Date of publication and mention of the grant of the patent: **08.07.2020**
(21) Application number: 16750385.3
(22) Date of filing: 13.07.2016
(51) Int. Cl.: E06B 11/08, G01P 3/483, G01D 5/24, G07C 9/10, G07C 9/15, E05F 15/70, E05F 15/00

(54) **PASSAGE BARRIER SYSTEM**
DURCHGANGSBARRIERENSYSTEM
SYSTÈME DE BARRIÈRE DE PASSAGE

(30) Priority: 14.08.2015 IT UB20153132
(43) Date of publication of application: 20.06.2018
(73) Proprietor: HC2 S.R.L., 20037 Paderno Dugnano (MI) (IT)
(72) Inventor: STEFFENINI, Stefano, 23862 Civate (IT); COLOMBO, Massimo, 20062 Cassano d'Adda (IT)
(74) Representative: Rupprecht, Kay
(86) International application number: PCT/EP2016/066612
(87) International publication number: WO 2017/029035

(56) References cited:
- EP-A2- 2 211 014
- EP-B1- 2 038 503
- US-A- 5 539 293
- US-A1- 2013 271 119

## Description

### BACKGROUND OF THE INVENTION

### Technical Field

The present invention relates to passage barrier systems with automatically swiveling or rotating barrier members.

### Prior art

Passage barrier systems of the said kind are known in the most varied embodiments and serve to optionally permit or block the passage of persons or the passage of a vehicles. In a simple construction, they may be designed as a revolving door with two door members arranged opposite each other and mutually aligned, each of which is firmly attached to a common shaft extending vertically between the door members and which can be driven by a motor. Alternatively, the barrier member may be in the shape of a motor driven turnstile or motor driven swivel arms.

The passage barrier systems of the prior art may be electronically controlled by an electromechanical system including said motor forming part of an actuator means for rotating or swiveling the barrier member about a vertical axis to manage the flow pf passage of pedestrians in entry and in exit. More particularly, the electromechanical system is adapted to detect the position of the barrier member by a sensor means taking the stationary support of the barrier member as reference. Based on the output signal of the sensor means, a controller means is fed by this output signal for controlling the rotation/swiveling of the barrier member by controlling its drive provided by the actuator means. The position detection via the sensor means is used for instance to define a position for blocking the flow passage of pedestrians as well as a positon to let the pedestrians pass. It is known to use optical encoders, magnetic encoders, mechanical encoders, as well as electromechanical encoders as sensor means.

The above mentioned conventional sensor means show some significant drawbacks, since they suffer fragility, little resistance to dirt, unforeseen reactions to electrical interference or to electromagnetic wear due to contact between contact points, resulting in malfunctions and a shortened service-life. For instance, a magnetic encoder as sensor means is not suited to reliably determine the position of the barrier member in case of external magnetic interference fields temporarily affecting the reference magnet of this encoder causing temporary or definitive out of service of the system. Such magnetic interference field can originate from electromagnetic fields of mobile devices carried by the pedestrians.

A further drawback of conventional passage barrier systems originates from an imprecise rotation or swiveling kinetics of the barrier member caused by a not uniform reaction kinetics of the electromotor in response to the controller action.

EP 2 211 014 discloses a passage barrier system of the kind defined by the preamble of claim 1 Adapted to determine the open and the closed position of a barrier member, that is one of two rotation end positions of this member by a position sensor to cease rotation.

The US 2013/271119 A1 and the US 5 539 293 A disclose capacitive rotation encoders for detecting the absolute rotation position of a shaft.

Therefore, there exists a need of a passage barrier system which is neither prone to electrical and magnetic interferences nor prone to wear or suffering fragility and little resistance to dirt. Further, there exists a need of a passage barrier system providing for a precise rotation or swiveling kinetics of its barrier member.

To meet the above mentioned needs it is an object of the invention to provide a passage barrier system which is neither prone to electrical and magnetic interferences nor prone to wear or suffering fragility and little resistance to dirt. A further object underlying the present invention is to provide a passage barrier system allowing for a precise rotation or swiveling kinetics of its barrier member.

These objects are attained by a passage barrier system for controlling the passage of pedestrians defined by the features of claim 1.

Advantageously the barrier member support comprises a fixed portion supporting the stator of the capacitive rotation encoder and a rotatable portion connected to the rotator of the capacitive rotation encoder and defining the vertical rotation axis of the barrier member.

Further, it is advantageous to connect the rotator of the capacitive rotation encoder to a portion of a vertically oriented axle of the rotatable support portion.

Advantageously the rotator is mounted to a vertically oriented pin, which is mounted in coaxial orientation to the axle of a rotatable support portion of the barrier member support.

In order to provide a passage barrier system allowing for a precise rotation or swiveling kinetics of its barrier member its angular speed is detected from the temporal evolvement of the output signal of the sensor means and a correction signal is generated in case the detected angular speed should differ from a predetermined angular target speed, wherein the correction signal is fed to a driver for the actuator means to adjust the speed of this means.

Preferably the actuator means comprise an electromotor. The electromotor can be an alternating current motor, whereby a gear may be provided between the motor and the respective drive shaft, as for instance a reduction gear, in order to reduce a high motor speed and to multiply a low driving torque of the motor. Preferably, however, direct current motors are used, since these have in particular a good transient behavior and are very well controllable. In addition, direct current motors can be adjusted without any problem to the various power supply mains of different countries.

In order to allow for an undisturbed process of the control procedure the complete logical control of the controller means preferably is done in digital domain.

Advantageously the resolution of the capacitive rotation encoder is chosen to be about 5 to 15 points, preferably about 8 to 12 points and more preferably about 10 points per degree of the rotational position of the barrier member.

Preferably the barrier member support is made of hollow portions communicating with one another and receiving the capacitive rotation encoder as well as the controller means and the actuator means inside together with a power supply and connecting cables for these means. Said hollow portions are suited to save a lot of space since they allow for accommodating components of the passage barrier system.

Still more preferably the barrier member support comprises a stationary base portion, a stationary top portion and an intermediate portion) rotatable relative to the stationary base and top portions about a vertical axis common all of these three support portions, wherein the barrier member is fixed to the intermediate portion , and wherein the rotator of the capacitive rotation encoder is connected to the top of the intermediate portion whereas the stator is fixed to the stationary top portion. Further, the actuator means and/or the power is located on the base support portion and the barrier member support portions have a cylindrical shape with identical cylinder diameters.

Advantageously an anti-panic opening device is provided for in case of emergency allowing the forced opening of the barrier member if the centrally automatic opening is operated or if a shock resistance value of above about 6 kg/m is detected, wherein the anti-panic opening device is operated by the controller means acting on an electromagnetic brakes system, preferably the controller means when in shock resistance functioning provided with a time-out closing system.

### BRIEF DESCRIPTION OF THE DRAWINGS

In the following, the present invention is described on the basis of an exemplary embodiment with reference to the enclosed drawing. In this drawing,
FIG. 1 is a perspective view of an embodiment of a passage barrier system in accordance with the present invention with an upper portion of the hollow barrier member support taken off and door at the lowest portion of the hollow barrier member opened, and
FIG. 2 is an explosive perspective view of the capacitive rotation encoder of a sensor means and its mechanical connection to the vertically oriented axle of a rotatable support portion of the barrier member support.

### DESCRIPTION OF THE PREFERRED EMBODIMENTS

In the drawing, identical reference numerals refer to similar components.

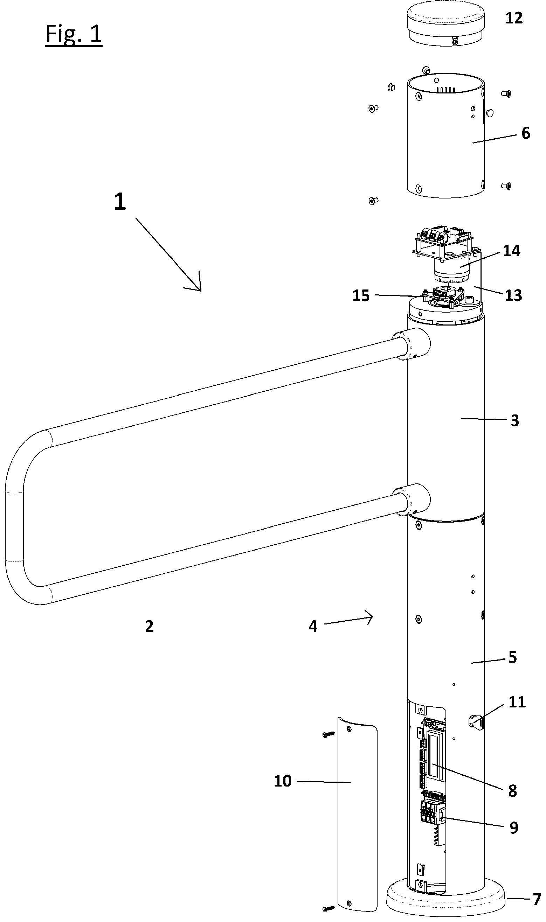

FIG. 1 shows a perspective view of an embodiment of a passage barrier system 1 in accordance with the present invention 5 adapted for controlling the flow of passing by pedestrians. The passage barrier system 1 comprises a horizontally oriented U-shaped barrier member 2 connected to a rotatable support portion (3) of a vertically erected barrier member support 4 by means of the two U-shape's free ends. The rotatable support portion 3 defines the middle part of the three-part barrier member support 4 including a stationary base support portion 5 adjacent the lower end of the rotatable support portion 3, and a stationary top support portion 6 adjacent the upper end of the rotatable support portion 3. The lower end of the stationary base portion 3 is fixed to a socket 7 to be floor embedded.

The three parts of the barrier member support 4 are hollow cylindrical parts of same diameter communicating with one another thereby defining an overall cylindrical shape of the support 4 as well as space for taking up components of the passage barrier system 1. Those components comprise a not shown actuator means comprising a not shown electromotor positioned within the upper part of the stationary base portion 4 for rotatable driving the barrier member 2, a controller means 8 for controlling the actuator means and a power supply 9 in the lower part of the stationary base portion 4. The controller means 8 and the power supply 9 are accessible via a cover 10 detachably screwed to the cylindrical wall of the stationary base portion 4 and forming part thereof. Next to the cover 10 there is a key-operated power on/off switch 11 connected to the power supply 9.

Connecting cables (not shown) for the components of the passage barrier system are also located within the hollow of the barrier member support 4, including connecting cables running up to the top support portion 6 covered by a cover plate 12 at the upper end and taking up a sensor means 13 for detecting the rotation angle and/or rotation position of the barrier member 2. The sensor means 13 is attached to a circular support plate 15 forming part of the top support portion 6 and comprises a sensor head 14 for taking up the output signal of a capacitive rotation encoder 16 and transmitting the output signal to the controller means 8.

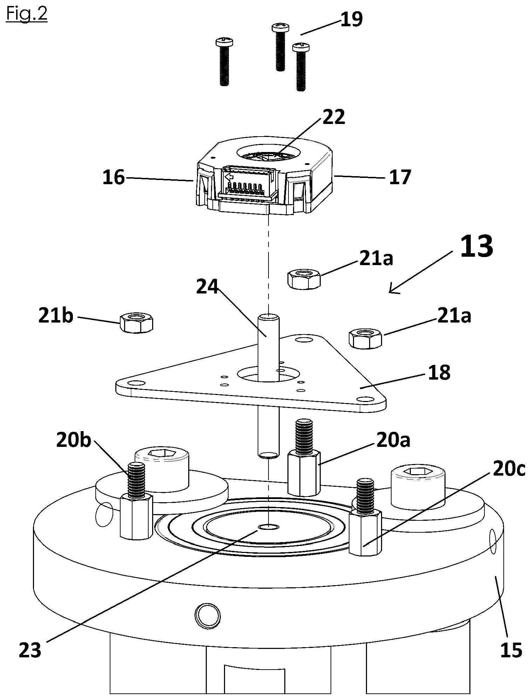

As best seen in Fig. 2, which shows an explosive perspective view of the capacitive rotation encoder 16 and its mechanical connection to the vertically oriented axle of the rotatable support portion of the barrier member support, the capacitive rotation encoder 16 comprises a stator 17 mounted to a triangular support plate 18 via three screws 19 which support plate 18 is mounted to the support plate 15 of the stationary top support portion via three threaded bolts 20 a-c and three nuts 21 a-c. The capacitive rotation encoder 16 further comprises rotator 22 located with a central opening of the stator 17 in aligned with the vertical rotation axis of the barrier member 2 and connected to the axle 23 thereof via a pin 24 thereby enabling the capacitive rotation encoder 16 to detect the rotation position/rotation angle of the axle 23 and hence the barrier member 22.

The output signal of the capacitive rotation encoder is input to the controller means 8 via the respective connecting cable and the controller means 8 is adapted to drive the electromotor of the actuator means of the barrier member 22 in such a kind as to define the rotation position of the barrier member 22 allowing for blocking the passing of pedestrians as well as the rotation position for letting pedestrians pass the barrier member 22.

For this purpose the controller means 8 comprises a not shown memory storing a list of rotation (position) angles including
- a first angle defining the rotation position of the barrier member 2 allowing for blocking the passing of pedestrians,
- a second angle defining the rotation position of the barrier member 2 allowing for the passing of the pedestrians in one direction and
- a third angle defining the rotation position of the barrier member 2 allowing for the passing of the pedestrians in the other direction, wherein
the controller means 8 is adapted to continuously read the rotation angle of the barrier member 2 detected by the capacitive rotation encoder 13 to thereby actuate the actuator means if the measured angle of the barrier member 2 does not coincide with said first angle until upon further rotation of the barrier member 2 those two rotation angles coincide with one another or by the second or third angle of the memory to thereby actuating the actuator means if the measured angle of the barrier member 2 does not coincide with said second or third angle until upon further rotation of the barrier member 2 those two rotation angles coincide with one another to thereby defined the blocking or the passing position of the barrier member 2.

Further, the invention provides for a precise actuation of the barrier element, respectively a uniform movement thereof irrespective of irregular advancements provided by the motor of the actuator means via the controller means as follows:

In order to allow for a uniform movement of the barrier member 2, its angular speed is detected from the temporal evolvement of the output signal of the capacitive rotation encoder 13 based on the list of rotation n angles stored on the and a correction signal is generated by the controller means 8 in case the detected angular speed should differ from a predetermined angular target speed calculated by processor of the controller means , wherein the correction signal is fed to a driver for the actuator means to adjust the speed of this means and hence the speed of the barrier member 2.

### LIST OF REFERENCE SIGNS

- 1: passage barrier system
- 2: barrier member
- 3: rotatable support portion
- 4: barrier member support
- 5: base support portion
- 6: top support portion
- 7: socket
- 8: controller means
- 9: power supply
- 10: cover
- 11: power on/off switch
- 12: top cover
- 13: sensor means
- 14: buzzer
- 15: circular support plate
- 16: capacitive rotation encoder
- 17: stator
- 18: triangular support plate
- 19: screws
- 20 a-c: threaded bolts
- 21 a-c: nuts
- 22: rotator
- 23: axle
- 24: pin

## Claims

1. A passage barrier system (1) for controlling the passage of pedestrians, comprising a barrier member (2), a barrier member support (4) and an actuator means, said barrier member (2) being rotatable by the actuator means about a vertical rotation axis of the barrier member support (4) between a position blocking in use the passage of pedestrians and a position enabling in use said passage, a sensor means (13) for detecting the rotation angle of the barrier member (2) and a controller means (8) fed by an output signal of the sensor means (13) for controlling the actuator means, wherein
the controller means (8) comprises a memory storing a list of rotation angles including
- a first angle defining the rotation position of the barrier member (2) allowing for blocking the passing of pedestrians,
- a second angle defining the rotation position of the barrier member (2) allowing for the passing of the pedestrians in one direction, and
the controller means (8) is adapted to continuously read the rotation angle of the barrier member (2) detected by the sensor means (13) to thereby actuate the actuator means if the measured angle of the barrier member (2) does not coincide with a selected one of the list of rotation angles, wherein the actuator means ceases to be actuated when the measured angle coincides with a selected one of the angles of the list of rotation angles to thereby define a blocking or the passing position of the barrier member (2) for the blocking or the passing of pedestrians,
**characterized in that**
the sensor means (13) comprises a capacitive rotation encoder (16), having a rotor (22) and stator (17),
the memory listing comprises a third angle defining the rotation position of the barrier member (2) allowing for the passing of the pedestrians in the other direction, and
in order to allow for a uniform movement of the barrier member (2) irrespective of actuator means movement fluctuations, its angular speed is detected from the temporal evolvement of the output signal of the capacitive rotation encoder (16) and a correction signal is generated by the controller means (8) in case the detected angular speed should differ from a predetermined angular target speed, wherein the correction signal is fed to a driver for the actuator means to adjust the speed of this means.

2. The passage barrier system (1) of claim 1, wherein the barrier member support (4) comprises a fixed support portion (5, 6) supporting the stator (17) of the capacitive rotation encoder (16) and a rotatable support portion (3) connected to the rotator (22) of the capacitive rotation encoder (16) and defining the vertical rotation axis of the barrier member (2).

3. The passage barrier system (1) of claim 2, wherein the rotator (22) of the capacitive rotation encoder (16) is connected to a portion of a vertically oriented axle (23 of a rotatable support portion (3) of the barrier member support (4).

4. The passage barrier system (1) of claim 3, wherein the rotator (22) is mounted to a vertically oriented pin (24), which is mounted in coaxial orientation to the axle (23) of the rotatable support portion (3).

5. The passage barrier system (1) of one of claims 1 to 4, wherein the actuator means comprise an electromotor.

6. The passage barrier system (1) of one of claims 1 to 5, wherein the complete logical control of the controller means (8) is done in digital domain.

7. The passage barrier system (1) of one of claims 1 to 6, wherein the resolution of the capacitive rotation encoder (6) is chosen to be about 5 to 15 points, preferably about 8 to 12 points and more preferably about 10 points per degree of the rotational position of the barrier member (2).

8. The passage barrier system (1) of one of claims 1 to 78, wherein barrier member support (4) is made of hollow portions (3, 5, 6) communicating with one another and receiving the capacitive rotation encoder (16) as well as the controller means (8) and the actuator means inside together with a power supply (9) and connecting cables for these means.

9. The passage barrier system (1) of one of claims 2 to 8, wherein the barrier member support (4) comprises a stationary base portion (5), a stationary top portion (6) and an intermediate portion (3) rotatable relative to the stationary base and top portions (5, 6) about a vertical axis common all of these three support portions, wherein the barrier member (2) is fixed to the intermediate rotatable portion (3), and wherein the rotator (22) of the capacitive rotation encoder (16) is connected to the top of the intermediate routable portion (3) whereas the stator (17) is fixed to the stationary top portion (6).

10. The passage barrier system (1) of claim 9, wherein the actuator means is located in the base support portion (5).

11. The passage barrier system (1) of claim 10 in connection with claim 10, wherein the power supply (9) is located in the base support portion (5).

12. The passage barrier system (1) of one of claims 9 to 1, wherein the barrier member support portion (4) has a cylindrical shape with identical cylinder diameters of its different parts (3, 5, 6).

13. The passage barrier system (1) of one of claims 1 to 12, wherein an anti-panic opening device is provided for in case of emergency allowing the forced opening of the barrier member (2) if the centrally automatic opening is operated or if a shock resistance value of above about 6 kg/m is detected, wherein the anti-panic opening device is operated by the controller means (8) acting on an electromagnetic brakes system, preferably the controller means (8) when in shock resistance functioning provided with a time-out closing system.

## Patentansprüche

1. Durchgangssperrsystem (1) zur Steuerung des Durchgangs von Fußgängern, umfassend ein Sperrelement (2), eine Sperrelementhalterung (4) und eine Betätigungseinrichtung, wobei das Sperrelement (2) durch die Betätigungseinrichtung um eine vertikale Drehachse der Sperrelementhalterung (4) zwischen einer Position, die bei Gebrauch den Durchgang von Fußgängern blockiert, und einer Position, die bei Gebrauch den Durchgang ermöglicht, drehbar ist, eine Sensoreinrichtung (13) zur Feststellung des Drehwinkels des Sperrelements (2) und eine Steuereinrichtung (8), der ein Ausgangssignal der Sensoreinrichtung (13) zur Steuerung der Betätigungseinrichtung zugeführt wird, wobei die Steuereinrichtung (8) einen Speicher umfasst, der eine Liste von Drehwinkeln speichert, einschließlich
- eines ersten Winkels, der die Drehposition des Sperrelements (2) definiert, die es zulässt, das Durchgehen von Fußgängern zu blockieren,
- eines zweiten Winkels, der die Drehposition des Sperrelements (2) definiert, die das Durchgehen der Fußgänger in einer Richtung zulässt, und
die Steuereinrichtung (8) angepasst ist, den durch die Sensoreinrichtung (13) festgestellten Drehwinkel des Sperrelements (2) ständig auszulesen, um dadurch die Betätigungseinrichtung auszulösen, wenn der gemessene Winkel des Sperrelements (2) nicht mit einem ausgewählten der Liste von Drehwinkeln übereinstimmt, wobei das Auslösen der Betätigungseinrichtung aufhört, wenn der gemessene Winkel mit einem ausgewählten der Winkel der Liste von Drehwinkeln übereinstimmt, um dadurch eine Sperr- oder die Durchlassposition des Sperrelements (2) zum Sperren oder zum Durchlassen von Fußgängern zu definieren,
**dadurch gekennzeichnet, dass**
die Sensoreinrichtung (13) einen kapazitiven Drehgeber (16) mit Rotor (22) und Stator (17) aufweist,
die Speicherauflistung einen dritten Winkel enthält, der die Drehposition des Sperrelements (2) definiert, die das Durchlassen der Fußgänger in der anderen Richtung zulässt, und um eine gleichmäßige Bewegung des Sperrelements (2), von Bewegungsschwankungen der Betätigungseinrichtung unabhängig, zu ermöglichen, seine Winkelgeschwindigkeit aus der zeitlichen Entfaltung des Ausgangssignals des kapazitiven Drehgebers (16) festgestellt wird und durch die Steuereinrichtung (8) in dem Fall, dass die festgestellte Winkelgeschwindigkeit von einer vorgegebenen zielgerichteten Winkelgeschwindigkeit abweichen sollte, ein Korrektursignal erzeugt wird, wobei das Korrektursignal einem Treiber für die Betätigungseinrichtung zugeführt wird, um die Geschwindigkeit dieser Einrichtung einzustellen.

2. Durchgangssperrsystem (1) nach Anspruch 1, wobei die Sperrelementhalterung (4) ein feststehendes Halterungsteil (5, 6) aufweist, das den Stator (17) des kapazitiven Drehgebers (16) trägt, und ein drehbares Halterungsteil (3), das mit der Dreheinrichtung (22) des kapazitiven Drehgebers (16) verbunden ist und die vertikale Drehachse des Sperrelements (2) bildet.

3. Durchgangssperrsystem (1) nach Anspruch 2, wobei die Dreheinrichtung (22) des kapazitiven Drehgebers (16) mit einem Abschnitt einer vertikal ausgerichteten Achse (23) eines drehbaren Halterungsteils (3) der Sperrelementhalterung (4) verbunden ist.

4. Durchgangssperrsystem (1) nach Anspruch 3, wobei die Dreheinrichtung (22) auf einem vertikal ausgerichteten Zapfen (24) sitzt, der in koaxialer Ausrichtung zur Achse (23) des drehbaren Halterungsteils (3) angebracht ist.

5. Durchgangssperrsystem (1) nach einem der Ansprüche 1 bis 4, wobei die Betätigungseinrichtung einen Elektromotor aufweist.

6. Durchgangssperrsystem (1) nach einem der Ansprüche 1 bis 5, wobei die komplette logische Steuerung der Steuereinrichtung (8) im digitalen Bereich geschieht.

7. Durchgangssperrsystem (1) nach einem der Ansprüche 1 bis 6, wobei die Auflösung des kapazitiven Drehgebers (6) mit etwa 5 bis 15 Punkten, vorzugsweise etwa 8 bis 12 Punkten und besser etwa 10 Punkten pro Grad der Drehposition des Sperrelements (2) gewählt ist.

8. Durchgangssperrsystem (1) nach einem der Ansprüche 1 bis 7, wobei die Sperrelementhalterung (4) aus Hohlteilen (3, 5, 6) besteht, die miteinander in Verbindung stehen und sowohl den kapazitiven Drehgeber (16) als auch die Steuereinrichtung (8) und die Betätigungseinrichtung im Innern zusammen mit einer Stromversorgung (9) aufnehmen und Kabel für diese Einrichtungen verbinden.

9. Durchgangssperrsystem (1) nach einem der Ansprüche 2 bis 8, wobei die Sperrelementhalterung (4) ein feststehendes Basisteil (5), ein feststehendes Oberteil (6) und ein Zwischenteil (3) umfasst, das relativ zum feststehenden Basisteil und feststehenden Oberteil (5, 6) drehbar ist um eine vertikale Achse, die allen dieser drei Trägerteile gemeinsam ist, wobei das Sperrelement (2) am drehbaren Zwischenteil (3) befestigt ist, und wobei die Dreheinrichtung (22) des kapazitiven Drehgebers (16) mit der Oberseite des drehbaren Zwischenteils (3) verbunden ist, wogegen der Stator (17) am feststehenden Oberteil (6) befestigt ist.

10. Durchgangssperrsystem (1) nach Anspruch 9, wobei die Betätigungseinrichtung im Halterungsbasisteil (5) angeordnet ist.

11. Durchgangssperrsystem (1) nach Anspruch 10 in Verbindung mit Anspruch 10, wobei die Stromversorgung (9) im Halterungsbasisteil (5) angeordnet ist.

12. Durchgangssperrsystem (1) nach einem der Ansprüche 9 bis 1, wobei das Sperrelementhalterungsteil (4) eine zylindrische Form mit gleichen Zylinderdurchmessern seiner unterschiedlichen Teile (3, 5, 6) aufweist.

13. Durchgangssperrsystem (1) nach einem der Ansprüche 1 bis 12, wobei eine Antipanik-Öffnungsvorrichtung für Notfall vorgesehen ist, die das erzwungene Öffnen des Sperrelements (2) zulässt, falls das zentral automatische Öffnen ausgelöst wird oder wenn ein Stoßfestigkeitswert oberhalb von etwa 6 kg/m festgestellt wird, wobei die Antipanik-Öffnungsvorrichtung durch die Steuereinrichtung (8) ausgelöst wird, die auf ein elektromagnetisches Bremsensystem wirkt, vorzugsweise die Steuereinrichtung (8) bei erschütterungsfester Arbeitsweise, die mit einem Zeitüberwachungs-Schließsystem versehen ist.

## Revendications

1. Système de barrière de passage (1) pour contrôler le passage de piétons, comprenant un élément formant barrière (2), un support pour élément formant barrière (4) et un moyen d'actionnement, ledit élément formant barrière (2) pouvant être mis en rotation par le moyen d'actionnement autour d'un axe de rotation vertical du support pour élément formant barrière (4) entre une position de blocage, lors de l'utilisation, du passage de piétons et une position d'autorisation, lors de l'utilisation, dudit passage, un moyen capteur (13) pour détecter l'angle de rotation de l'élément formant barrière (2) et un moyen formant contrôleur (8) auquel est fourni un signal de sortie du moyen capteur (13) afin de commander le moyen d'actionnement, dans lequel
le moyen formant contrôleur (8) comprend une mémoire stockant une liste d'angles de rotation incluant
- un premier angle définissant la position de rotation de l'élément formant barrière (2) autorisant le blocage du passage de piétons,
- un second angle définissant la position de rotation de l'élément formant barrière (2) autorisant le passage des piétons dans une direction, et
le moyen formant contrôleur (8) est adapté pour lire continuellement l'angle de rotation de l'élément formant barrière (2) détecté par le moyen capteur (13), pour actionner ainsi le moyen d'actionnement si l'angle mesuré de l'élément formant barrière (2) ne coïncide pas avec un angle sélectionné parmi la liste d'angles de rotation, dans lequel le moyen d'actionnement cesse d'être actionné quand l'angle mesuré coïncide avec un angle sélectionné parmi les angles de la liste d'angles de rotation afin de définir ainsi une position de blocage une position de passage de l'élément formant barrière (2) pour le blocage ou pour le passage de piétons,
**caractérisé en ce que**
le moyen capteur (13) comprend un codeur rotatif capacitif (16) ayant un rotor (22) et un stator (17),
la liste en mémoire comprend un troisième angle définissant la position de rotation de l'élément formant barrière (2) permettant le passage de piétons dans l'autre direction et
afin de permettre un mouvement uniforme de l'élément formant barrière (2) indépendamment des fluctuations de mouvements du moyen d'actionnement, sa vitesse angulaire est détectée à partir de l'évolution temporelle du signal de sortie du codeur rotatif capacitif (16) et un signal de correction est généré par le moyen formant contrôleur (8) dans le cas où la vitesse angulaire détectée serait différente d'une vitesse cible angulaire prédéterminée, dans lequel le signal de correction est fourni à un pilote pour le moyen d'actionnement afin d'ajuster la vitesse de ce moyen.

2. Système de barrière de passage (1) selon la revendication 1, dans lequel le support pour élément formant barrière (4) comprend une portion de support fixe (5, 6) qui supporte le stator (17) du codeur rotatif capacitif (16) et une portion de support rotative (3) connectée au rotor (22) du codeur rotatif capacitif (16) et définissant l'axe de rotation vertical de l'élément formant barrière (2).

3. Système de barrière de passage (1) selon la revendication 2, dans lequel le rotor (22) du codeur rotatif capacitif (16) est connecté à une portion d'un axe orienté verticalement (23) d'une portion de support rotative (3) du support pour élément formant barrière (4).

4. Système de barrière de passage (1) selon la revendication 3, dans lequel le rotor (22) est monté sur une broche orientée verticalement (24), laquelle est montée dans une orientation coaxiale à l'axe (23) de la portion de support rotative (3).

5. Système de barrière de passage (1) selon l'une des revendications 1 à 4, dans lequel le moyen d'actionnement comprend un moteur électrique.

6. Système de barrière de passage (1) selon l'une des revendications 1 à 5, dans lequel la commande logique complète du moyen formant contrôleur (8) est effectuée dans le domaine numérique.

7. Système de barrière de passage (1) selon l'une des revendications 1 à 6, dans lequel la résolution du codeur rotatif capacitif (6) est choisie à environ 5 à 15 points, de préférence environ 8 à 12 points, et de façon plus préférée environ 10 points par degré de position de rotation de l'élément formant barrière (2).

8. Système de barrière de passage (1) selon l'une des revendications 1 à 7, dans lequel le support pour élément formant barrière (4) est réalisé de portions creuses (3, 5, 6) communiquant les unes avec les autres et recevant le codeur rotatif capacitif (16) ainsi que le moyen formant contrôleur (8) et le moyen d'actionnement à l'intérieur conjointement avec une alimentation de puissance (9) et des câbles de connexion pour ces moyens.

9. Système de barrière de passage (1) selon l'une des revendications 2 8, dans lequel le support pour élément formant barrière (4) comprend une portion de base stationnaire (5), une portion de sommet stationnaire (6) et une portion intermédiaire (3) capable de rotation par rapport à la partie de base stationnaire et à la partie de sommet stationnaire (5, 6) autour d'un axe vertical commun à ces trois portions de support, dans lequel l'élément formant barrière (2) est fixé à la portion rotative intermédiaire (3), et dans lequel le rotor (22) du codeur rotatif capacitif (16) est connecté au sommet de la portion rotative intermédiaire (3) tandis que le stator (17) est fixé sur la portion de sommet stationnaire (6).

10. Système de barrière de passage (1) selon la revendication 9, dans lequel le moyen d'actionnement est situé dans la portion de support de base (5).

11. Système de barrière de passage (1) selon la revendication 10 en association avec la revendication 9, dans lequel l'alimentation de puissance (9) est située dans la portion de support de base (5).

12. Système de barrière de passage (1) selon l'une des revendications 9 à 11, dans lequel la portion de support pour élément formant barrière (4) a une forme cylindrique avec des diamètres de cylindre identiques de ses différentes parties (3, 5, 6).

13. Système de barrière de passage (1) selon l'une des revendications 1 à 12, dans lequel il est prévu un dispositif d'ouverture anti panique pour permettre en cas d'urgence l'ouverture forcée de l'élément formant barrière (2) si l'ouverture automatique centralisée est mise en fonctionnement ou si une valeur de résistance au choc supérieure à environ 6 kg/m est détectée, dans lequel le dispositif d'ouverture anti panique est mis en fonctionnement par le moyen formant contrôleur (8) agissant sur un système de frein électromagnétique, de préférence le moyen formant contrôleur (8) étant pourvu d'un système de fermeture temporisée lorsqu'il est en fonctionnement en résistance de choc.
